# EUROPEAN PATENT APPLICATION

(11) **EP 1 235 395 A1**
(43) Date of publication of application: **28.08.2002**
(21) Application number: 01308051.0
(22) Date of filing: 21.09.2001
(51) Int. Cl.: H04L 12/58, H04M 3/533

(54) **Method and device for unified messaging**

(30) Priority: 23.02.2001 US 792477
(71) Applicant: Avaya, Inc., Basking Ridge, NJ 07920 (US)
(72) Inventor: Block, Frederick P., Westminster, CO 80031 (US)
(74) Representative: Williams, David John

(57) **Abstract**

A standards-based e-mail client (170), such as an IMAP-compliant client, provides access to user data of non-e-mail applications of a unified messaging system (100), such as to a user's personal greeting (161) of a voice mail application (160), and to a user's choice of a fax machine (180) for printing faxes and any faxes enqueued (151) in a fax messaging application (150). An association is established in an e-mail server (130) of the system between an application and a folder (191) of the user's mailbox (190) by means of the name given to the folder. In response to the e-mail client opening (200,400,600) the folder, the e-mail server retrieves (202,402,602) the corresponding user data (e.g., personal greeting, from the associated application and presents (206,406,606) it in the form of an e-mail message to the client. In response to the e-mail client storing (300,500,700) an e-mail message to the folder, the e-mail server provides (306,506,706) the message contents as the corresponding user data to the associated application.

## Description

### Technical Field

This invention relates to unified messaging systems.

### Background of the Invention

A unified messaging system provides a plurality of different messaging services, such as voice mail, e-mail, fax messaging, and/or multimedia messaging, all in one system. The unified messaging system typically offers multiple access mechanisms, including voice access via telephones, personal computer (PC) access via a product-specific (custom) client, PC access via a standards-based e-mail client, and/or PC access via a Web browser.

The e-mail client is designed to support e-mail capabilities. But a unified messaging system provides more than just e-mail capabilities. Consequently, the unified messaging system usually provides features and capabilities beyond those that are supported by the e-mail client. These include the ability to provide and to change a user's personal greetings for voice mail, the ability to provide and to change personal Web page information for the user, and the ability to select and specify a fax machine for printing messages from the user's mailbox.

### Summary of the Invention

This invention is directed to solving these and other problems and disadvantages of the prior art. Generally according to the invention, a method of operating a unified messaging system comprises the following steps. First, an association is established in an e-mail server between an application of the unified messaging system and a folder of a mailbox of a user of the system. The application is illustratively a messaging application such as a voice-mail server, a fax messaging server, or Web messaging server, and the mailbox is a mailbox of a user of the application. The folder may be a virtual folder―and having existence in name only. In response to an e-mail client opening (e.g.,reading) the folder, the e-mail server of the system provides data of the user from the application to the e-mail client in the form of a message in the folder. The e-mail client is illustratively the e-mail client of the user who owns the mailbox, and the data is illustratively data about the user that the user provides to the application, such as the user's personal greeting of the voice-mail, the user's fax and the address (telephone number) of the fax machine at which the user's fax is enqueued to be printed, or the user information that is used by Web messaging to create the user's home page. The user can thus access and review the user data that are used by non-e-mail applications via a conventional e-mail client, e.g., a standard IMAP client. Correspondingly, in response to the e-mail client storing (e.g., writing) a message in the folder, the e-mail server provides the contents of that message as the user's data to the application. The user can thus change the user data that are used by non-e-mail applications via the conventional e-mail client.

The invention provides access to both fundamental and advanced UMS capabilities by using a standards-based client and familiar messaging concepts. A custom client is not needed, thereby reducing product development costs and eliminating the need for end-users to learn how to use a new client. Use of standards-based client interfaces also exposes this capability in a programmatic sense to numerous developer toolkits containing libraries for interfacing with IMAP4 servers. One example of such a library is the javamail class library from Sun Microsystems for use in creating IMAP4-aware applications. The general idea of using special IMAP4 folders to implement server-side actions could even be incorporated into the IMAP4 protocol standard (RFC2060) as an extension of the standard that is fully compatible with the present standard.

Unlike the approach of sending a message to an email address identifying the desired fax machine, the invention requires the client to be actively logged on, utilizing an e-mail retrieval protocol rather than an e-mail sending protocol. This arrangement allows the fax printing operation to be associated with a particular, authenticated, user and does not expose the UMS to potential abuse from unauthorized individuals. The use of a fax queue folder also provides a convenient way of indicating the status of the requested fax print operation.

While the invention has been characterized in terms of a method, it also encompasses apparatus that performs the method. The apparatus preferably includes an effecter―any entity that effects the corresponding step, unlike a means―for each step. The invention further encompasses any computer readable medium containing instructions which, when executed in a computer, cause the computer to perform the method steps.

These and other advantages and features of the invention will become more apparent from a detailed description of an illustrative embodiment of the invention considered together with the drawing.

### Brief Description of the Drawing

FIG. 1 is a block diagram of a communications system that includes an illustrative embodiment of the invention;
FIGs. 2 and 3 are functional flow diagrams of operation of an e-mail server of the system of FIG. 1 with respect to personal greetings of a voice mail server of the system of FIG. 1;
FIGs. 4 and 5 are functional flow diagrams of operation of the e-mail server of the system of FIG. 1 with respect to home page information of a Web server of the system of FIG. 1; and
FIGs. 6 and 7 are functional flow diagrams of operation of the e-mail server of the system of FIG. 1 with respect to fax queues of a fax server of the system of FIG. 1.

### Detailed Description

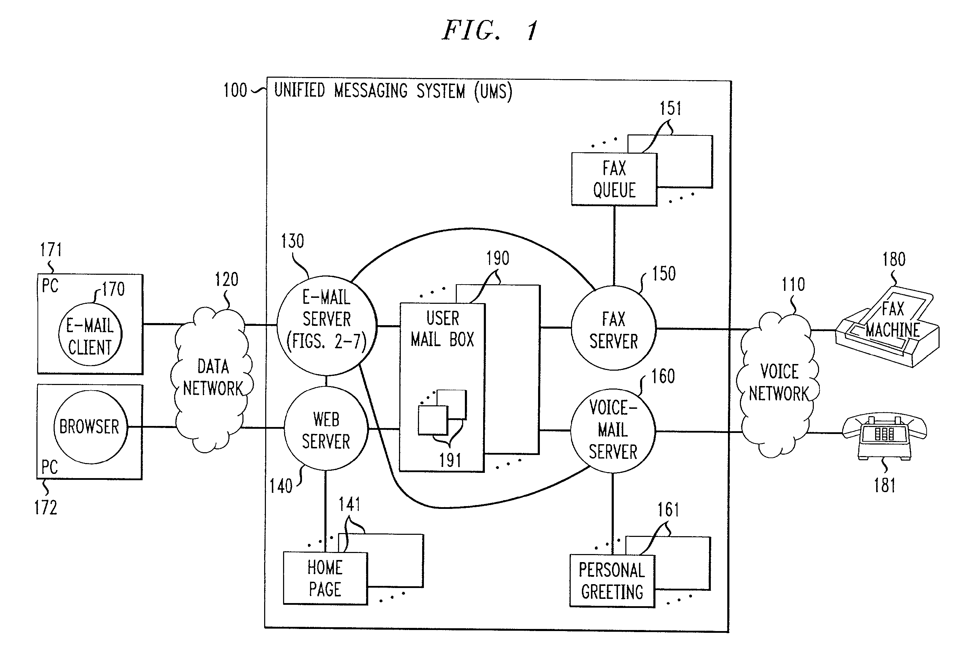

FIG. 1 shows a communications system that includes an illustrative embodiment of the invention. The system of FIG. 1 is centered on a unified messaging system (UMS) 100 which is connected to both a voice network 110 and a data network 120. Voice network 110 is illustratively a telephone network, while data network 120 is illustratively a local area network (LAN) such as an intranet or a wide area network (WAN) such as the Internet. UMS 100 includes a plurality of application programs 130-160 that provide a variety of user services. These include an e-mail server 130 that provides e-mail services by communicating across data network 120 with e-mail clients 170 executing on users' PCs 171, a Web server 140 that provides Web information services by communicating across data network 120 with users' browser-equipped PCs 172, a fax server 150 that provides fax services by communicating with fax machines 180 across voice network 110, and a voice mail server 160 that provides voice mail services by communicating with users' telephone terminals 181 across voice network 110. UMS 100 is illustratively a stored-program-controlled machine, such as the Intuity® UMS of Avaya Inc., where servers 130-160 are illustratively implemented as data and program instructions stored in a memory and executing on a processor or of UMS 100. E-mail client 170 and server 130 are illustratively an e-mail standards-based client and server, respectively, preferably conforming to the IMAP4 standard.

UMS 100 includes users' mailboxes 190 which servers 130-160 use to store and retrieve users' messages. Users may organize their mailboxes 190 into a plurality of file folders 191. Messages are stored in folders 191 in mailboxes 190 as electronic (computer) files. While mailboxes 190 are shared by servers 130-160, each server 130-160 usually includes data (often user-specific) that are dedicated or private to that server. These illustratively include various data about (pertaining to) the user that are supplied by the user, such as user's data for a personal home-page 141 that are used by Web server 140 to generate each user's home page, user's personal greeting 161 played out by voice mail server 160 to callers who reach the user's mailbox, and fax queues 151 each corresponding to a different fax machine 180 and used by fax server 150 to buffer users' fax messages for printing to fax machines 180. Users' personal home pages 141 containing user-specified content are traditionally created by using a variety of authoring tools and then are transferred as files to Web server 140 by using a file transfer protocol such as FTP. Dynamic generation of personal home pages from information contained in a UMS 100 is a recent capability. In such a system, the mechanism to manage the content of a home page may be either direct or indirect. A direct mechanism provides the user control over some part or all of the Web page by using a custom client, such as a Web-based or a stand-alone PC application. An indirect mechanism relies on user actions executed via standard interfaces of UMS 100 to control the Web page content. An example of an indirect mechanism is recording of a new greeting that would be reflected on the user's system-generated home page. To effect management of personal greetings 161 of voice-mail server 160, a UMS 100 typically provides multiple access mechanisms, including voice-access via telephone, PC access via product-specific (custom) client, and/or PC access via Web browser. And while UMS 100 typically offers users the ability to print messages received into their mailbox 190 to a fax machine 180, this feature is generally restricted to proprietary interfaces such as the UMS' telephone interface or custom PC clients. In the industry, this feature is presently offered to e-mail standards-based clients only by providing an e-mail address for a fax machine 180 that is accessible to the e-mail client. Such an address might be, for example, FAX=1234567@ UMhost.com., or FAX=+18001234567@UMhost.com. Providing access via an e-mail address, particularly if the phone number for the fax machine is unrestricted, raises a security issue, since the e-mail transmission is generally not authenticated and toll charges may be incurred by the fax phone call. For this reason, many UMSs do not offer fax-machine access to an e-mail standards-based client 170.

As described so far, the communications system of FIG. 1 is conventional. In summary, a user conventionally does not have access via a conventional standards-based e-mail client 170 to his or her home-page data 141, fax queues 151, or personal greeting 161.

According to the invention, the functionality of the conventional e-mail server 130 is modified to provide access by the conventional e-mail client 170 to home page data 141, fax queues 151, and/or personal greeting 161. The notion is to expose this information as folders to the e-mail subsystem. The modification may be made internally to server 130 or may be affected by an add-on to server 130. E-mail server 130 is configured to recognize and respond to certain special folders 191 in users' mailboxes 190. These special folders 191 may be virtual folders, in that they need not have actual physical existence in users' mailboxes 190 in the sense of having memory allocated to them. Rather, they may exist only as predetermined folder names to which e-mail server 130 responds in predetermined special ways. At least one such special folder 191 in each user's mailbox 190 is associated with each of the servers 140-160. This association is effected by e-mail server 130 being programmed to treat a folder 191 of a particular name as corresponding to a particular server 140-160. Illustratively, e-mail server 130 recognizes a virtual folder 191 named "public" as corresponding to Web server 140 in general and to home page 141 in particular, recognizes a virtual folder 191 named "greeting" as corresponding to voice-mail server 160 in general and to personal greeting 161 in particular, and recognizes a virtual folder "fax-queue" as corresponding to fax server 150 in general and to fax queues 151 in particular. Furthermore, a hierarchy of virtual folders 191 (subfolders) may be used for different types (items) of information within the generic type of information represented by the top folder 191 in the hierarchy. For example, a user may have a plurality of different personal greetings in his or her personal greeting 161, such as different greetings for different callers or for different times of day; correspondingly, "greeting" folder 191 may be subtended by a plurality of subfolders each with its own unique name and each corresponding to a different personal greeting. Home page 141 of a user may include different types of home-page information, such as the user's name, a greeting, a phone number, a fax number, an e-mail address with a link to leave a message, etc.; correspondingly, "public" folder 191 may be subtended by a plurality of subfolders each with its own unique name and each corresponding to a different type of home-page information. Or, a user may be able to print faxes at any one of a plurality of fax machines 180 via different fax queues 151; correspondingly, "fax-queue" folder 191 may be subtended by a plurality of subfolders each corresponding to a different fax machine 180 and having that fax machine's telephone number as a part of its name. Other folders 191 in mailboxes 190 are treated conventionally by e-mail server 130.

Access to a user's personal greeting(s) 161 is provided to an IMAP4 client 170 through the use of an automatically-created one or more "greeting" folders 191 containing a standard e-mail message that includes a voice attachment which is the greeting. The IMAP4 e-mail retrieval protocol includes support for server-side folders. The customary use for such folders is to allow users to organize their saved e-mail messages. The protocol is rich enough to allow an IMAP4 server 130 to provide "pre-created" folders that are not explicitly created by the user. To install a new greeting, the user creates a message containing the greeting by any mechanism (perhaps by recording the message by using his or her PC microphone and sound card, or by leaving a call-answer message consisting of the greeting) and then copies the message containing the desired greeting into "greeting" folder 191. These actions use standard abilities of an IMAP4 client 170. But IMAP4 server 130 does not simply archive the message containing the greeting; rather, in response to the user copying the message into the special "greeting" folder 191, server 130 makes the audio attachment of this message the user's active greeting on voice mail server 160. Server 130 could reject a client request to copy a message without an audio attachment into "greeting" folder 191. In addition, since the IMAP4 protocol is designed to allow concurrent access to the same mailbox 190 from multiple clients, server 130 itself can effectively enforce a rule that only one message can exist in a "greeting" folder 191 at a time. If a message is already present in a "greeting" folder 191 when the user copies a new message into it, server 130 could move the existing message into an "old greetings" folder or could simply delete the existing message. These actions appear to client 170 as if another client, simultaneously accessing the same mailbox 190, had done them. UMS 100 that provides multiple greetings 161 for different purposes, such as separate greetings for "busy" and "no answer", presents multiple "greeting" folders 191 indicating the specific greeting type, such as "greeting-busy" or "greeting-call answer". These specific greeting-type folders 191 may be presented as sub-folders to a top-level "greeting" folder 191. Since these folders 191 are automatically created on server 130, in the event that server 130 knows the user's primary language (which UMS 100 typically does), the names used for folders 191 can be in the user's language. Greeting management performed by other clients would be visible through this mechanism as well. For example, if a user records a new greeting via a telephone 181 and later examines his or her "greeting" folder 191 via IMAP4 client 170, then the greeting recorded on the phone would appear to be a message saved in the "greeting" folder 191.

Messages contained in a user's automatically-created "public" folder 191 are formatted as individual items for presentation in the user's system-generated personal home page. As was mentioned above, the IMAP4 e-mail retrieval protocol includes support for server-side folders. To manage public information items that are available via the user's personal home page 141, the user adds or deletes messages in his or her "public" folder 191. In response, e-mail server 130 causes Web server 140 to include each message contained in the user's "public" folder 191 as an information item on the user's system-generated personal home page 141. The exact presentation on a home page of the messages contained in the public folder is not relevant hereto. The subject of such a message can be shown as a hyperlink to the message content or, for messages with multiple content-media, the subject can be shown with a media icon which links to a real or a virtual file containing the content in that medium. Regardless of the specific formatting rules, the message contains sufficient information to allow presentation on a Web page. Server 130 may reject a client request to copy to the user's "public" folder 191 either messages from other folders or only messages marked private. Disallowing copying of messages from other folders would limit the use of "public" folder 191 to messages which the user creates, much like the "Drafts" folder used by Netscape Communicator to hold unsent drafts of messages. Allowing copying of messages from other folders not marked private would let the user include any received e-mail message as an information item on their Web home page 141. The IMAP4 protocol supports the notion of a hierarchical subfolder structure. Server 130 can therefore allow the user to create subfolders and use this subfolder structure to organize the public information items, perhaps on separate Web pages linked from the user's main page. Restricted access to a folder or subfolder can be indicated by the user including a message with a specific subject, perhaps "password=xxx".

The ability to send a message to an arbitrary fax phone number is provided to IMAP4 client 170 through the use of a client-created "fax-queue" folder (or folders) 191 whose name indicates the phone number of the destination fax machine180. As was mentioned above, the IMAP4 e-mail retrieval protocol includes support for server-side folders. To send a message to a fax machine, the user creates a folder 191 with a name such as "faxq-1234567", and then copies a message into this folder 191. These actions use standard abilities of IMAP4 client 170. But the IMAP4 server 130 does not archive the message; rather it internally queues the message for transmission to the fax machine 180 that is indicated by the phone number that is embedded in the folder's name (in this case, based on the folder name beginning with "faxq-"). Server 130 may reject a client request to copy a message without any faxable content, for example, a simple voice message. In addition, since the IMAP4 protocol is designed to allow concurrent access to the same mailbox 190 from multiple clients, server 130 itself could check the delivery status and present such status in the form of a message in "fax queue" folder 191 to indicate the success or failure of the fax transmission. These actions would appear to client 170 as if another client, simultaneously accessing the same mailbox 190, had done them. "Fax queue" folders 191 may also be presented as sub-folders of a top-level "fax-queue" folder 191 that is automatically created by server 130. In this case, in the event that server 130 knows the user's primary language (which UMS typically does), the name that is used for the top-level folder 191 can be in the user's language. Fax-printing operations performed by other clients are visible through this mechanism as well. For example, if a user prints a message to fax machine 180 via telephone 181 and later examines his or her "fax queue" folder 191 via IMAP4 client 170, then the message that is queued to be sent or the results of the fax transmission are seen in folder 191 whose name identifies the phone number of fax machine 180.

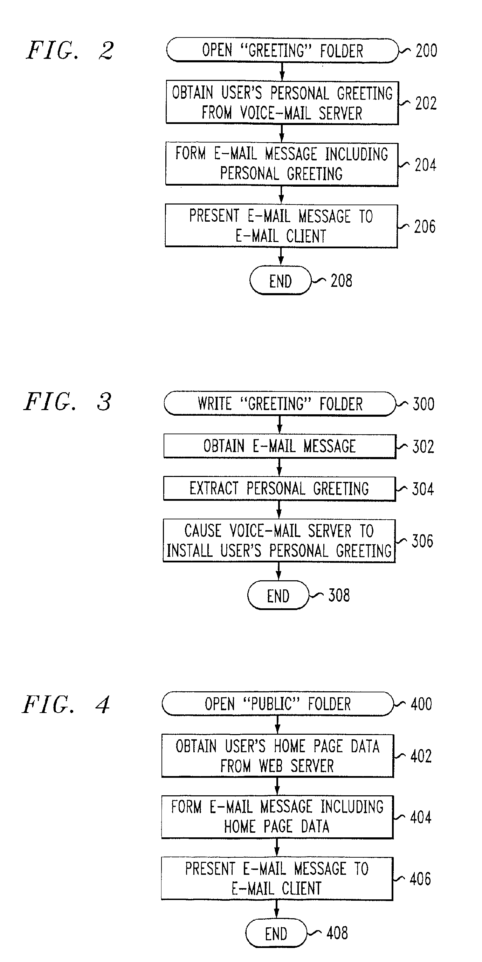

The functionality of e-mail server 130 that gives e-mail client 170 access to user information 141, 151, 161 is shown in FIGs. 2-7. Usually before e-mail client 170 accesses a folder 191 created by e-mail server 130, there is a step where client 170 requests a list of the folders in its corresponding mailbox 190 to discover the existence of these server-created folders. Optionally, the names of these folders 191 may be presented by server 130 to e-mail client 170 in the language of the user of client 170. This is effected as follows. Server 130 has a plurality of lists of folder 191 names, one list for and in each language (e.g., Spanish, English, French, etc.) supported by server 130. Server 130 also has data associating a language with each user, i.e., with each client 170. When a client 170 requests a list of the folders in its corresponding mailbox 190, server 130 looks up the client's corresponding language and then presents the list of files 191 in that language to the client 170.

FIG. 2 shows the response of e-mail server 130 to e-mail client 170 opening "greeting" virtual folder 191 in a user's mailbox 190. Upon receipt of the conventional "open" (or "read") request, at step 200, server 130 recognizes the folder name "greeting" as the name of a special folder 191 that is associated with voice-mail server 160. Server 130 requests personal greeting 161 of the user who owns mailbox 190 from voice-mail server 160, at step 202. Alternatively, e-mail server 130 could directly access personal greeting 161 and extract the user's personal greeting therefrom; personal greeting 161 may even be stored in a folder managed by e-mail server 130 from which voice-mail server 160 retrieves greeting 161 whenever it needs to play the greeting out. Upon obtaining the user's personal greeting as a computer file, at step 202, server 130 forms a conventional e-mail message having the user's personal greeting as an attachment, at step 204, and presents the e-mail message to e-mail client 170 in "greeting" virtual folder 191, at step 206. The message thus becomes available for retrieval by e-mail client 170. Response of server 130 to the "open" request then ends, at step 208.

FIG. 3 shows the response of e-mail server 130 to e-mail client 170 storing (e.g., writing) a message with an audio attachment in "greeting" virtual folder 191 in a user's mailbox 190. Client 170 may store a message in a folder 191 in any one of a number of conventional ways, such as by appending an e-mail to "greeting" folder 191, or by transferring an existing message from another folder in mailbox 190 to "greeting" folder. Upon receipt of the request to store the message, at step 300, server 130 obtains the message, at step 302, e.g., by receiving it over data network 120 or retrieving it from another folder. Server 103 then extracts the contents of the message attachment, at step 304, and causes voice-mail server 160 to install the contents as the user's personal greeting 161, at step 306. Alternatively, e-mail server 130 could directly access personal greeting 161 and install the user's personal greeting therein; as mentioned above, personal greeting 161 may even be stored in a folder managed by e-mail server 130 from which voice-mail server 160 retrieves greeting 161 whenever it is needed. Response of server 130 to the store-message request then ends, at step 308.

FIG. 4 shows the response of e-mail server 130 to e-mail client 170 opening "public" virtual folder 191 in a user's mailbox 190. Upon receipt of the conventional "open" request, at step 400, server 130 recognizes the folder name "public" as the name of a special folder 191 that is associated with Web server 160. Server 130 requests home-page information 141 of the user who owns mailbox 190 from Web server 140, at step 402. Alternatively, e-mail server 130 could directly access home-page information 141 and extract the user's home-page information therefrom, either from Web server 140's storage or from a file managed by e-mail server 130. Upon obtaining the user's home-page information, at step 402, server 130 forms a set of one or more conventional e-mail messages that have the user's home-page information as their contents and/or as attachments, at step 404, and presents the e-mail messages to e-mail client 170 in "public" virtual folder 191, at step 406. Response of server 130 to the "open" request then ends, at step 408.

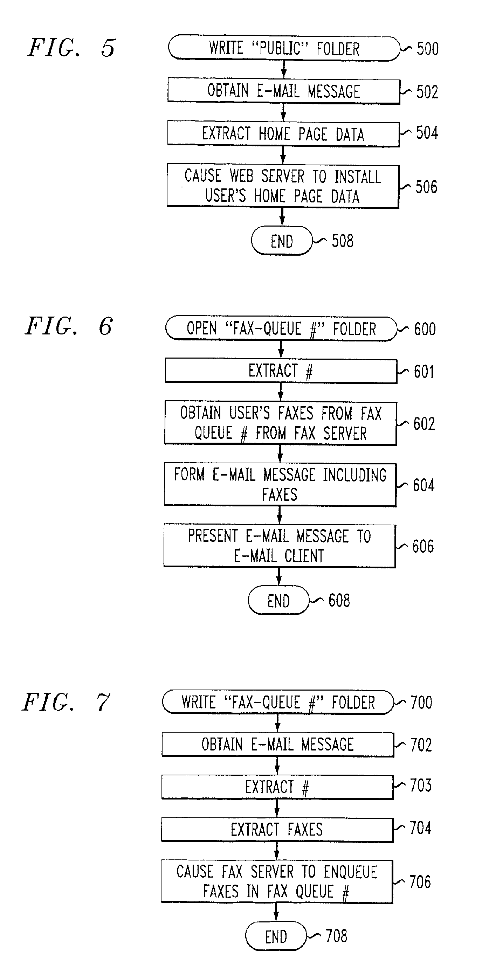

FIG. 5 shows the response of e-mail server 130 to e-mail client 170 storing a message in "public" virtual folder 191 in a user's mailbox 190. Client 170 again may store a message in a folder 191 in any one of a number of conventional ways, such as by appending an e-mail to "public" folder 191, or by transferring an existing message from another folder in mailbox 190 to "public" folder 191. Upon receipt of the request to store the message, at step 500, server 130 receives the message, at step 502, e.g., by receiving it over data network 120 or retrieving it from another folder. Server 130 then extracts the contents of the message, at step 504, and causes Web server 160 to install the contents as the user's home-page information 141, at step 506. Alternatively, e-mail server 130 could directly access home-page information 141 and install the user's home-page information therein, either in Web server 140's storage or in a file managed by e-mail server. Response of server 130 to the store-message request then ends, at step 508.

FIG. 6 shows the response of e-mail server 130 to e-mail client 170 opening "fax-queue #" virtual folder 191 in a user's mailbox 190, where # is the telephone number of a particular fax machine 180. Upon receipt of the conventional "open" request, at step 600, server 130 recognizes the folder name "fax-queue" as the name of a special folder 191 that is associated with fax server 150. Server 130 extracts the telephone number # from the folder name, at step 601, requests the user's enqueued faxes from fax queue 151 corresponding to # from fax server 150, at step 602, forms a conventional e-mail message containing the retrieved faxes or present delivery status, at step 604, and presents the e-mail to e-mail client 170 in a "fax-queue" virtual folder 191, at step 606. Response of server 130 to the "open" request then ends, at step 608.

FIG. 7 shows the response of e-mail server 130 to e-mail client storing a message in virtual folder 191 named "fax-queue #" where "#" represents the telephone number of fax machine 180 at which the user desires the contents of the message to be printed out. As was mentioned before, client 170 may store the message in folder 191 in any one of a member of conventional ways. Upon receipt of the request to store the message, at step 700, server 130 obtains the message, at step 701, extracts the telephone number # of fax machine 180 from the name of the destination folder 191, at step 702, extracts the message contents, at step 704, and causes fax server 150 to enqueue the message contents in fax queue 151 that corresponds to the telephone number (i.e., that corresponds to fax machine 180 that is addressed by that telephone number), at step 706. Alternatively, at step 706 server 130 stores the message in a real fax-queue folder that is managed by server 130 and that is used by fax server 150 as fax queue 151. Response of server 130 to the store-message request then ends, at step 708.

Of course, various changes and modifications to the illustrative embodiment described above may be envisioned. For example, while the disclosed embodiment has an architecture in which the data that is presented as folders by the e-mail server is actually stored by the voice-mail server, the fax server, or the Web server, the same external behavior can be exhibited by a system in which the data is actually stored by the e-mail server and retrieved as needed by the voice-mail server, the fax server, or the Web server, or where the data is stored in a "neutral" location and is accessed as needed by both the e-mail server and non-e-mail servers. The latter "neutral" implementation may be preferred. The invention may also be extended to handle multiple greeting types (call answer, busy, etc.), folder names presented in user's language, online help (help folder including messages with help per topic and/or "how to use this folder" message that simply appears in each of these folders), auto-reply message (presented in yet another of these folders), play-on-phone folder (copy a message containing an audio attachment to "play-on-phone" folder to have the system generate an outcall to play the message via the phone rather than via the PC's speakers), call sender folder (copy message including senders' phone number to "call sender" folder to initiate GUI call sender operation), or personal options folder (containing a message indicating user-settable options - to change options, one either replies to this message with indicated changes, or it indicates the URL for a Web page where one can change one's options). Such changes and modifications can be made without departing from the spirit and the scope of the invention and without diminishing its attendant advantages. It is therefore intended that such changes and modifications be covered by the following claims except insofar as limited by the prior art.

## Claims

1. A method of operating a unified messaging system (100) comprising:
in response to an e-mail client (170) reading (200;400;600) a folder (191) of a user's mailbox (190) of the unified messaging system, which folder an e-mail server (130) of the unified messaging system associates with an application (160,140,150) of the unified messaging system, the server providing (202-206;402-406;602-606) data of the user from the application program to the client in a form of an e-mail message; and
in response to the e-mail client writing (300;500;700) an e-mail message to the folder, the e-mail server providing (302-306;502-506;702-706) contents of the e-mail message as the data (161,141,151) of the user to the application program.

2. The method of claim 1 wherein:
the e-mail server presents to the e-mail client a name of the folder that the e-mail server associates with the application program, the e-mail server associates with the client, and the client references the folder by the name expressed in the one language.

3. The method of claim 1 for accessing a user's home page information in the messaging system, wherein:
in response to the e-mail client reading (400) the folder which the e-mail server associates with a Web messaging application (140) of the messaging system, the e-mail server obtaining (402) home page (141) information of the user from the Web messaging application and providing (404-406) the obtained home page information to the client in the form of at least one e-mail message; and
providing contents comprises
in response to the e-mail client writing (500) the e-mail message containing home page information to the folder, the e-mail server retrieving (502-504) the contained home page information from the written e-mail message and providing (506) the retrieved home page information as the user's home page information to the Web messaging application.

4. The method of claims 1 for accessing a user's personal greeting in the messaging system, wherein:
providing data comprises
in response to the e-mail client reading (200) the folder which folder the e-mail server associates with a voice messaging application (160) of the messaging system, the e-mail server obtaining (202) a personal greeting (204-206) of the user from the voice messaging application and providing (204-206) the obtained personal greeting to the client in the form of an e-mail message; and
providing contents comprises (300)
in response to the e-mail client writing the e-mail message containing a personal greeting to the folder, the e-mail server retrieving (302-304) the contained personal greeting from the written e-mail message and providing (306) the retrieved personal greeting as the user's personal greeting to the voice-messaging application.

5. The method of claim 1 for designating a fax machine (180) to the messaging system, wherein:
providing contents comprises in response to the e-mail client writing (700) an e-mail message containing a fax to one of a plurality of folders of the user's mailbox (190), each of which folders the e-mail server associates with a different fax machine, the e-mail server causing (702-706) a fax messaging application (150) of the messaging system to send the fax to the fax machine associated with the one folder.

6. The method of claim 1 for designating a fax machine (180) to the messaging system wherein:
providing data comprises
in response to the e-mail client reading (600) the folder which the e-mail server of the messaging system associates with a fax machine (180), the e-mail server obtaining (601-602) any faxes that are enqueued for the user for printing at the fax machine from a fax messaging application (150) of the messaging system and providing (604-606) the obtained faxes to the client in an e-mail message; and
providing contents comprises
in response to the e-mail client writing (700) an e-mail message containing a fax to the folder, the e-mail server retrieving (702-704) the contained fax from the written e-mail message and causing (706) the fax messaging application to send the retrieved fax for printing to the associated fax machine.

7. An apparatus (100) adapted to perform the method of one of the claims 1-6.

8. A unified messaging system (100) comprising:
a message mailbox (190) of a user of the system;
an application (160;140;150) having data of the user;
an e-mail server (130), responsive to an e-mail client (170) reading (200;400;600) a folder (191) of the user's mailbox, which folder the e-mail server associates with the application, by providing (202-206;402-406;602-606) the data of the user from the application to the client in a form of an e-mail message,
the e-mail server further responsive to the e-mail client writing (300;500;700) an e-mail message to the folder, by providing (302-306;502-506;702-706) contents of the e-mail message as the data (161,141,151) of the user to the application.

9. The apparatus of claim 7 or the system of claim 8 wherein:
the folder has a name that the e-mail server associates with the application.

10. The apparatus of claim 7 or the system of claim 8 wherein:
the e-mail server comprises an IMAP server.
